(19)

**Europäisches Patentamt**

**European Patent Office**

**Office européen des brevets**

(11) **EP 4 667 598 A1**

(12) **EUROPEAN PATENT APPLICATION**
published in accordance with Art. 153(4) EPC

(43) Date of publication:
24.12.2025 Bulletin 2025/52

(21) Application number: 24756701.9

(22) Date of filing: 02.02.2024

(51) International Patent Classification (IPC):
$C22C\ 38/00^{(2006.01)}$  $C22C\ 38/58^{(2006.01)}$
$H01M\ 8/0612^{(2016.01)}$  $H01M\ 8/10^{(2016.01)}$
$H01M\ 8/12^{(2016.01)}$

(52) Cooperative Patent Classification (CPC):
C22C 38/00; C22C 38/58; H01M 8/0612;
H01M 8/10; H01M 8/12

(86) International application number:
PCT/JP2024/003515

(87) International publication number:
WO 2024/171851 (22.08.2024 Gazette 2024/34)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 14.02.2023 JP 2023020811

(71) Applicant: NIPPON STEEL CORPORATION
Chiyoda-ku
Tokyo 100-8071 (JP)

(72) Inventors:
• **KOBAYASHI, Ryo**
  **Tokyo 100-0005 (JP)**
• **YOSHIOKA, Yuma**
  **Tokyo 100-0005 (JP)**
• **HATANO, Masaharu**
  **Tokyo 100-0005 (JP)**

(74) Representative: **Zimmermann & Partner
Patentanwälte mbB
P.O. Box 330 920
80069 München (DE)**

(54) **WELDED JOINT**

(57) A weld joint, in which a chemical composition of a base metal includes, in mass%, C: 0.10% or less, Si: 1.9 to 5.0%, Mn: 4.00% or less, P: 0.040% or less, S: 0.0040% or less, Cr: 15.0 to 26.0%, Ni: 7.0 to 23.0%, N: 0.001 to 0.250%, Al: 0.05% or less, arbitrary elements, and the balance: Fe and impurities, and a chemical composition of a weld metal includes, in mass%, C: 0.10% or less, Si: 1.5 to 4.0%, Mn: 3.00% or less, P: 0.040% or less, S: 0.0040% or less, Cr: 17.0 to 25.0%, Ni: 10.0 to 23.0%, N: 0.100% or less, and Al: 0.08% or less.

EP 4 667 598 A1

**Description**

TECHNICAL FIELD

The present invention relates to a weld joint.

BACKGROUND ART

Austenitic stainless steel materials, which have an excellent heat resistance, may be welded and used as part members. Accordingly, for example, as in Patent Document 1, a weld joint made of austenitic stainless steel has been developed, in which hot cracking and ductility-dip cracking, which are types of weld defects, are prevented from occurring and weldability is improved.

LIST OF PRIOR ART DOCUMENT

PATENT DOCUMENT

Patent Document 1: JP2017-051968A

SUMMARY OF INVENTION

TECHNICAL PROBLEM

Meanwhile, in recent years, improvements in welding technology have been observed, and various techniques have been developed. One example is MIG welding. The MIG welding refers to a method of welding by feeding a filler metal while inert gas is used for the shield gas. It has faster welding speed and higher production efficiency compared to other welding methods.

There are several ways of feeding the filler metal in the MIG welding. For example, in recent years, there has been proposed in robotic welding and the like a way of feeding the filler metal referred to as a push-pull system. The push-pull system is excellent in feeding characteristics for filler metals, and thus has an improved welding speed, as well as generates less spatters. However, a problem with the MIG welding of the push-pull system is that, when it is used to produce a weld joint, the shield gas tends to be unstable and internal defects such as blow holes are likely to occur. The blow holes are bubbly internal defects resulting from shield gas constituents remaining in the weld metal and serve as causes of the degradation of high-temperature strength. However, Patent Document 1 does not address blow holes generated when the weld joint is produced in the MIG welding of the push-pull system.

Keeping the above in mind, an objective of the present invention is to provide a weld joint in which the austenitic stainless steel material is used as a base metal and blow holes are prevented from occurring and high-temperature strength is improved even when welding is performed in the MIG welding of the push-pull system.

SOLUTION TO PROBLEM

The gist of the present invention, which has been made to solve the above problem, is a weld joint as described below.

(1) A weld joint including a base metal consisting of an austenitic stainless steel material, and a weld metal, wherein

a chemical composition of the base metal includes, in mass%,
C: 0.10% or less,
Si: 1.9 to 5.0%,
Mn: 4.00% or less,
P: 0.040% or less,
S: 0.0040% or less,
Cr: 15.0 to 26.0%,
Ni: 7.0 to 23.0%,
N: 0.001 to 0.250%,
Al: 0.05% or less,
Cu: 0 to 1.00%,

Mo: 0 to 1.00%,
Sn: 0 to 0.030%,
W: 0 to 0.30%,
Co: 0 to 1.0%,
V: 0 to 0.20%,
Zr: 0 to 0.030%,
B: 0 to 0.0020%,
Mg: 0 to 0.0010%,
Ca: 0 to 0.0020%,
REM: 0 to 0.010%,
Ta: 0 to 0.10%,
Ti: 0 to 0.35%,
Nb: 0 to 0.30%, and
the balance: Fe and impurities, and
a chemical composition of the weld metal includes, in mass%,
C: 0.10% or less,
Si: 1.5 to 4.0%,
Mn: 3.00% or less,
P: 0.040% or less,
S: 0.0040% or less,
Cr: 17.0 to 25.0%,
Ni: 10.0 to 23.0%,
N: 0.100% or less, and
Al: 0.08% or less.

(2) The weld joint according to the above (1), wherein a back bead width D is 3.0 to 8.0 mm.
(3) The weld joint according to the above (1), wherein an A-value calculated by a following formula (i) is 0.02 to 0.27:

$$\text{A-value} = -0.051 \times D + 0.0083 \times Si + 0.411 \dots \text{(i)}$$

where, Si in the formula represents a content (mass%) of Si contained in the weld metal, and D in the formula represents the back bead width (mm).
(4) The weld joint according to the above (2), wherein an A-value calculated by a following formula (i) is 0.02 to 0.27:

$$\text{A-value} = -0.051 \times D + 0.0083 \times Si + 0.411 \dots \text{(i)}$$

where, Si in the formula represents a content (mass%) of Si contained in the weld metal, and D in the formula represents the back bead width (mm).
(5) The weld joint according to any one of the above (1) to (4), wherein the chemical composition of the base metal includes one or more elements selected from, in mass%,

Cu: 0.01 to 1.00%,
Mo: 0.01 to 1.00%,
Sn: 0.001 to 0.030%,
W: 0.001 to 0.30%,
Co: 0.001 to 1.0%,
V: 0.01 to 0.20%,
Zr: 0.001 to 0.030%,
B: 0.0002 to 0.0020%,
Mg: 0.0001 to 0.0010%,
Ca: 0.0002 to 0.0020%,
REM: 0.001 to 0.010%,
Ta: 0.001 to 0.10%,
Ti: 0.01 to 0.35%, and
Nb: 0.01 to 0.30%.

(6) The weld joint according to any one of the above (1) to (4), wherein the weld joint is used in a fuel reformer.

(7) The weld joint according to the above (5), wherein the weld joint is used in a fuel reformer.

ADVANTAGEOUS EFFECT OF INVENTION

According to the present invention, a weld joint in which blow holes are prevented from occurring and high-temperature strength is improved can be obtained even when welding is performed in the MIG welding of a push-pull system.

DESCRIPTION OF EMBODIMENT

The inventors have conducted studies for blow holes generated when an austenitic stainless steel material is used as a base metal and welding is performed in MIG welding of a push-pull system and obtained the following findings (a) to (c).

(a) Welding by the MIG welding of the push-pull system tends to cause a lower amount of heat input and a shortened time for solidifying a molten metal. In this case, gas constituents, which would otherwise bubble up and pop from a molten pool of molten metal, tend to remain inside and blow holes are likely to occur. The blow holes tend to gather near the center of a weld metal, serving as a starting point of fracture.

(b) Accordingly, the inventors have paid attention to improving the ease of flow of molten metal, that is, molten metal flowability. The improvement of the molten metal flowability makes it possible for gas constituents to bubble up and leave from within the molten pool, so that blow holes can be reduced. Then, it has been revealed that it is effective to increase the content of Si of the weld metal to 1.5% or more to improve the molten metal flowability.

(c) The inventors have also paid attention to extending the time for solidification during welding. An extended time for solidification makes it possible for gas constituents to bubble up and leave from within the molten pool, so that blow holes can be reduced. Then, as an approach for extending the time for solidification, the back bead width is preferably made in the range of 3.0 to 8.0 mm. Furthermore, the back bead width and the content of Si of the weld metal preferably satisfy a predetermined relational formula.

The weld joint of an embodiment of the present invention has been made based on the above-described findings. The requirements for the weld joint of the embodiment will now be described in detail.

1. Constitution of Weld Joint

The weld joint of the embodiment includes a base metal consisting of an austenitic stainless steel material and a weld metal. The base metal refers to the material to be welded in a state after welding has been performed. Note that the base metal includes a heat-affected zone of welding, which is affected by heat input by welding. Accordingly, the base metal excluding the heat-affected zone of welding has a chemical composition, a metallographic structure, and properties similar to the austenitic stainless steel material (base steel material) that is a starting material of the joint. Furthermore, the weld metal refers to a portion at which the molten metal is solidified into a joint part and a weld zone refers to the weld metal.

2. Chemical Composition of Base Metal

As described above, the base metal consists of the austenitic stainless steel material. In the chemical composition of the base metal, the reason for limitation for each element is as described below. Note that in the description below, "%" for the content refers to "mass%".

C: 0.10% or less

C (carbon) produces an effect of improving strength at normal and high temperatures. However, excessively contained C causes the degradation of high-temperature strength instead. Accordingly, the content of C is 0.10% or less. The content of C is preferably 0.07% or less, and more preferably 0.05% or less. On the other hand, to obtain the above-described effect, the content of C is preferably 0.001% or more.

Si: 1.9 to 5.0%

Si (silicon) produces an effect of improving oxidation resistance. Accordingly, the content of Si is 1.9% or more. The content of Si is preferably 2.0% or more, and more preferably 2.2% or more. However, excessively contained Si is likely to cause σ embrittlement and causes the degradation of high-temperature strength in the base metal. Accordingly, the content of Si is 5.0% or less. The content of Si is preferably 4.5% or less, and more preferably 4.0% or less.

Mn: 4.00% or less

Mn (manganese) produces an effect of increasing the stability of the austenite phase and improving strength. However, excessively contained Mn causes the degradation of high-temperature ductility and toughness. Accordingly, the content of Mn is 4.00% or less. The content of Mn is preferably 3.90% or less, more preferably 3.00% or less, and further preferably 2.50% or less. On the other hand, to obtain the above-described effect, the content of Mn is preferably 0.30% or more, and more preferably 0.50% or more.

P: 0.040% or less

P (phosphorus) causes the degradation of hot workability and toughness as an impurity. The weldability will also be degraded. Accordingly, the content of P is 0.040% or less. It is preferable to reduce the content of P as much as possible, but extreme reduction of P leads to an increase in production costs. Accordingly, the content of P is preferably 0.010% or more.

S: 0.0040% or less

S (sulfur) is contained in the steel as an impurity and causes the degradation of hot workability and high-temperature ductility. Accordingly, the content of S is 0.0040% or less. It is preferable to reduce the content of S as much as possible, but extreme reduction of S leads to an increase in production costs. Accordingly, the content of S is preferably 0.0002% or more.

Cr: 15.0 to 26.0%

Cr (chromium) produces an effect of improving corrosion resistance and oxidation resistance. Accordingly, the content of Cr is 15.0% or more. The content of Cr is preferably 15.5% or more, more preferably 18.0% or more, and further preferably 19.0% or more. However, excessively contained Cr leads to an increase in production costs. Accordingly, the content of Cr is 26.0% or less. The content of Cr is preferably 25.0% or less, and more preferably 24.0% or less.

Ni: 7.0 to 23.0%

Ni (nickel) produces an effect of stabilizing the austenite phase. An effect of improving high-temperature strength will also be produced. Accordingly, the content of Ni is 7.0% or more. The content of Ni is preferably 8.5% or more, and more preferably 10.0% or more. However, excessively contained Ni causes the degradation of weldability. An increase in production costs will also be caused. Accordingly, the content of Ni is 23.0% or less. The content of Ni is preferably 22.0% or less, and more preferably 21.0% or less.

N: 0.001 to 0.250%

N (nitrogen) produces an effect of stabilizing the austenite phase and improving strength. Accordingly, the content of N is 0.001% or more. The content of N is preferably 0.005% or more, and more preferably 0.010% or more. However, excessively contained N causes an increase in internal defects in the base metal. Accordingly, the content of N is 0.250% or less. The content of N is preferably 0.240% or less, preferably 0.220% or less, more preferably 0.210% or less, and further preferably 0.200% or less.

Al: 0.05% or less

Al (aluminum) is an element that produces a deoxidation effect. However, excessively contained Al causes the degradation of weldability. Accordingly, the content of Al is 0.05% or less. The content of Al is preferably 0.04% or less, and more preferably 0.03% or less. In addition, to obtain the above-described effect, the content of Al is preferably 0.01% or more.
In addition to the above-described elements, one or more elements selected from Cu, Mo, Sn, W, Co, V, Zr, B, Mg, Ca, REM, Ta, Ti, and Nb may further be contained to the extent indicated below. The reason for limitation for each element will be described.

Cu: 0 to 1.00%

Cu (copper) produces an effect of stabilizing the austenite phase and improving corrosion resistance and strength. Accordingly, Cu may be contained as necessary. However, excessively contained Cu causes the degradation of hot workability and weldability. Accordingly, the content of Cu is 1.00% or less. The content of Cu is preferably 0.90% or less, preferably 0.70% or less, more preferably 0.50% or less, and further preferably 0.30% or less. On the other hand, to obtain the above-described effect, the content of Cu is preferably 0.01% or more.

Mo: 0 to 1.00%

Mo (molybdenum) produces an effect of improving corrosion resistance and strength at normal and high temperatures. Accordingly, Mo may be contained as necessary. However, excessively contained Mo causes an increase in production costs. The producibility will also be degraded. Accordingly, the content of Mo is 1.00% or less. The content of Mo is preferably 0.70% or less, more preferably 0.50% or less, and further preferably 0.30% or less. On the other hand, to obtain the above-described effect, the content of Mo is preferably 0.01% or more.

Sn: 0 to 0.030%

Sn (tin) produces an effect of improving corrosion resistance. Accordingly, Sn may be contained as necessary. However, excessively contained Sn is likely to cause segregation and the like and causes the degradation of producibility. Accordingly, the content of Sn is 0.030% or less. The content of Sn is preferably 0.020% or less, more preferably 0.010% or less, and further preferably 0.005% or less. On the other hand, to obtain the above-described effect, the content of Sn is preferably 0.001% or more.

W: 0 to 0.30%

W (tungsten) produces an effect of improving strength at normal and high temperatures. Accordingly, W may be contained as necessary. However, excessively contained W causes an increase in production costs. Accordingly, the content of W is 0.30% or less. The content of W is preferably 0.20% or less, and more preferably 0.10% or less. On the other hand, to obtain the above-described effect, the content of W is preferably 0.001% or more.

Co: 0 to 1.0%

Co (cobalt) produces an effect of improving corrosion resistance and stabilizing the austenite phase. Accordingly, Co may be contained as necessary. However, excessively contained Co causes an increase in production costs. Accordingly, the content of Co is 1.0% or less. The content of Co is preferably 0.7% or less, more preferably 0.5% or less, and further preferably 0.3% or less. On the other hand, to obtain the above-described effect, the content of Co is preferably 0.001% or more.

V: 0 to 0.20%

V (vanadium) is dissolved in the base metal or precipitates as carbonitride and produces an effect of improving strength. Accordingly, V may be contained as necessary. However, excessively contained V causes the excessive formation of carbonitride and the degradation of hot workability. Accordingly, the content of V is 0.20% or less. The content of V is preferably 0.15% or less, and more preferably 0.10% or less. On the other hand, to obtain the above-described effect, the content of V is preferably 0.01% or more.

Zr: 0 to 0.030%

Zr (zirconium) forms oxide and the like and produces an effect of improving cleanliness of the base metal. Accordingly, Zr may be contained as necessary. However, excessively contained Zr causes the excessive formation of oxide and the like and the degradation of producibility instead. Accordingly, the content of Zr is 0.030% or less. The content of Zr is preferably 0.020% or less, and more preferably 0.010% or less. On the other hand, to obtain the above-described effect, the content of Zr is preferably 0.001% or more.

B: 0 to 0.0020%

B (boron) produces an effect of increasing grain boundary strength and increasing high-temperature ductility.

Accordingly, B may be contained as necessary. However, excessively contained B not only causes saturation of the above-described effect but also promotes grain boundary precipitation of boron compounds (BN, BC, $Cr_2B$), so that weld cracks will be likely to occur. Accordingly, the content of B is 0.0020% or less. The content of B is preferably 0.0015% or less, more preferably 0.010% or less, and further preferably 0.005% or less. On the other hand, to obtain the above-described effect, the content of B is preferably 0.0002% or more.

Mg: 0 to 0.0010%

Mg (magnesium) is an element that is effective for deoxidation and produces an effect of improving weldability. Accordingly, Mg may be contained as necessary. However, excessively contained Mg causes the excessive formation of oxide and the like and the degradation of producibility. Accordingly, the content of Mg is 0.0010% or less. The content of Mg is preferably 0.0008% or less, and more preferably 0.0005% or less. On the other hand, to obtain the above-described effect, the content of Mg is preferably 0.0001% or more.

Ca: 0 to 0.0020%

Ca (calcium) produces an effect of improving hot workability. Accordingly, Ca may be contained as necessary. However, excessively contained Ca causes the degradation of hot workability instead. The high-temperature ductility will also be degraded. Accordingly, the content of Ca is 0.0020% or less. The content of Ca is preferably 0.0015% or less, more preferably 0.0010% or less, and further preferably 0.0005% or less. On the other hand, to obtain the above-described effect, the content of Ca is preferably 0.0002% or more.

REM: 0 to 0.010%

REM (rare earth metal) produces an effect of improving hot workability and high-temperature ductility. Accordingly, REM may be contained as necessary. However, excessively contained REM causes an increase in production costs. Accordingly, the content of REM is 0.010% or less. The content of REM is preferably 0.007% or less, and more preferably 0.005% or less. On the other hand, to obtain the above-described effect, the content of REM is preferably 0.001% or more.
REM refers to a total of 17 elements of Sc, Y, and lanthanoid, and the content of REM refers to a total content of the elements. Industrially, REM is often contained as misch metal.

Ta: 0 to 0.10%

Ta (tantalum) forms carbide so that an effect of improving corrosion resistance will be produced. Accordingly, Ta may be contained as necessary. However, excessively contained Ta causes the degradation of mechanical properties such as toughness. Accordingly, the content of Ta is 0.10% or less. The content of Ta is preferably 0.08% or less, preferably 0.07% or less, more preferably 0.05% or less, and further preferably 0.03% or less. On the other hand, to obtain the above-described effect, the content of Ta is preferably 0.001% or more.

Ti: 0 to 0.35%

Ti (titanium) produces an effect of improving corrosion resistance. Accordingly, Ti may be contained as necessary. However, excessively contained Ti causes the degradation of ductility and toughness. Accordingly, the content of Ti is 0.35% or less. The content of Ti is preferably 0.30% or less, preferably 0.25% or less, more preferably 0.20% or less, more preferably 0.15% or less, and further preferably 0.10% or less. On the other hand, to obtain the above-described effect, the content of Ti is preferably 0.01% or more.

Nb: 0 to 0.30%

Nb (niobium) produces an effect of improving strength at normal and high temperatures. Accordingly, Nb may be contained as necessary. However, excessively contained Nb causes the degradation of weldability. Accordingly, the content of Nb is 0.30% or less. The content of Nb is preferably 0.25% or less, more preferably 0.20% or less, more preferably 0.15% or less, and further preferably 0.10% or less. On the other hand, to obtain the above-described effect, the content of Nb is preferably 0.01% or more.
In the chemical composition of the base metal of the embodiment, the balance is Fe and impurities. Here, "impurities" refer to components that are introduced due to various factors in raw materials such as scrap and ore and production processes when the base metal is industrially produced and that are acceptable to the extent that they do not adversely affect the embodiment.

3. Chemical Composition of Weld Metal

In the chemical composition of the weld metal, the reason for limitation for each element is as described below. Note that in the description below, "%" for the content refers to "mass%". Note that the chemical composition of the weld metal refers to an average chemical composition in the weld metal.

C: 0.10% or less

C (carbon) produces an effect of improving strength of the weld metal at normal and high temperatures. However, excessively contained C is likely to cause weld cracks. Accordingly, the content of C is 0.10% or less. The content of C is preferably 0.07% or less, and more preferably 0.05% or less. On the other hand, to obtain the above-described effect, the content of C is preferably 0.001% or more.

Si: 1.5 to 4.0%

Si (silicon) produces an effect of facilitating the flow of molten metal in the molten pool to reduce blow holes. Accordingly, the content of Si is 1.5% or more. The content of Si is preferably 1.6% or more. The content of Si is preferably 1.7% or more, more preferably 2.0% or more, and further preferably 2.2% or more. However, excessively contained Si is likely to cause σ embrittlement in the weld metal, leading to the degradation of high-temperature strength of the weld metal. Accordingly, the content of Si is 4.0% or less. The content of Si is preferably 3.5% or less, and more preferably 3.0% or less.

Mn: 3.00% or less

Mn (manganese) produces an effect of increasing the stability of the austenite phase and improving strength. However, excessively contained Mn causes the degradation of high-temperature ductility and toughness. Accordingly, the content of Mn is 3.00% or less. The content of Mn is preferably 2.80% or less, more preferably 2.50% or less, and further preferably 2.00% or less. On the other hand, to obtain the above-described effect, the content of Mn is preferably 0.50% or more.

P: 0.040% or less

P (phosphorus) causes the degradation of toughness as an impurity. The weldability will also be degraded. Accordingly, the content of P is 0.040% or less. It is preferable to reduce the content of P as much as possible, but extreme reduction of P leads to an increase in production costs. Accordingly, the content of P is preferably 0.010% or more.

S: 0.0040% or less

S (sulfur) is contained in the steel as an impurity and causes the degradation of high-temperature ductility. Accordingly, the content of S is 0.0040% or less. It is preferable to reduce the content of S as much as possible, but extreme reduction of S leads to an increase in production costs. Accordingly, the content of S is preferably 0.0002% or more.

Cr: 17.0 to 25.0%

Cr (chromium) produces an effect of increasing corrosion resistance. Accordingly, the content of Cr is 17.0% or more. The content of Cr is preferably 18.0% or more, and more preferably 19.0% or more. However, excessively contained Cr causes the degradation of weldability. Accordingly, the content of Cr is 25.0% or less. The content of Cr is preferably 24.0% or less, and further preferably 23.0% or less.

Ni: 10.0 to 23.0%

Ni (nickel) produces an effect of stabilizing the austenite phase. An effect of improving high-temperature strength will also be produced. Accordingly, the content of Ni is 10.0% or more. The content of Ni is preferably 11.0% or more, more preferably 12.0% or more, and further preferably 13.0% or more. However, excessively contained Ni causes the degradation of weldability. Accordingly, the content of Ni is 23.0% or less. The content of Ni is preferably 22.0% or less, more preferably 21.0% or less, more preferably 20.0% or less, and further preferably 19.0% or less.

N: 0.100% or less

N (nitrogen) produces an effect of stabilizing the austenite phase and improving strength. However, excessively contained N causes an increase in internal defects in the weld metal. Accordingly, the content of N is 0.100% or less. The content of N is preferably 0.090% or less, more preferably 0.080% or less, and further preferably 0.070% or less. On the other hand, to obtain the above-described effect, the content of N is preferably 0.001% or more, more preferably 0.005% or more, and further preferably 0.010% or more.

Al: 0.08% or less

Al (aluminum) is an element that produces a deoxidation effect. However, excessively contained Al causes the degradation of weldability. Accordingly, the content of Al is 0.08% or less. The content of Al is preferably 0.05% or less, more preferably 0.04% or less, and further preferably 0.03% or less. On the other hand, to obtain the above-described effect, the content of Al is preferably 0.01% or more.

In addition to the above-described elements, one or more elements selected from Cu, Mo, Sn, W, Co, V, Zr, B, Mg, Ca, REM, Ta, Ti, and Nb may further be contained to the extent indicated below. The reason for limitation for each element will be described.

Cu: 0 to 1.00%

Cu (copper) produces an effect of stabilizing the austenite phase and improving corrosion resistance and strength. Accordingly, Cu may be contained as necessary. However, excessively contained Cu causes the degradation of weldability. Accordingly, the content of Cu is preferably 1.00% or less. The content of Cu is preferably 0.90% or less, preferably 0.70% or less, more preferably 0.50% or less, and further preferably 0.30% or less. On the other hand, to obtain the above-described effect, the content of Cu is preferably 0.01% or more.

Mo: 0 to 1.00%

Mo (molybdenum) produces an effect of improving corrosion resistance and strength at normal and high temperatures. Accordingly, Mo may be contained as necessary. However, excessively contained Mo causes an increase in production costs. The producibility will also be degraded. Accordingly, the content of Mo is preferably 1.00% or less. The content of Mo is preferably 0.70% or less, more preferably 0.50% or less, and further preferably 0.30% or less. On the other hand, to obtain the above-described effect, the content of Mo is preferably 0.01% or more.

Sn: 0 to 0.030%

Sn (tin) produces an effect of improving corrosion resistance. Accordingly, Sn may be contained as necessary. However, excessively contained Sn is likely to cause segregation and the like and causes the degradation of producibility. Accordingly, the content of Sn is preferably 0.030% or less. The content of Sn is preferably 0.020% or less, more preferably 0.010% or less, and further preferably 0.005% or less. On the other hand, to obtain the above-described effect, the content of Sn is preferably 0.001% or more.

W: 0 to 0.30%

W (tungsten) produces an effect of improving strength at normal and high temperatures. Accordingly, W may be contained as necessary. However, excessively contained W causes an increase in production costs. Accordingly, the content of W is preferably 0.30% or less. The content of W is preferably 0.20% or less, and more preferably 0.10% or less. On the other hand, to obtain the above-described effect, the content of W is preferably 0.001% or more.

Co: 0 to 1.0%

Co (cobalt) produces an effect of improving corrosion resistance and stabilizing the austenite phase. Accordingly, Co may be contained as necessary. However, excessively contained Co causes an increase in production costs. Accordingly, the content of Co is preferably 1.0% or less. The content of Co is preferably 0.7% or less, more preferably 0.5% or less, and further preferably 0.3% or less. On the other hand, to obtain the above-described effect, the content of Co is preferably 0.001% or more.

V: 0 to 0.20%

V (vanadium) is dissolved in the weld metal or precipitates as carbonitride and produces an effect of improving strength. Accordingly, V may be contained as necessary. However, excessively contained V causes the excessive formation of carbonitride and the degradation of toughness. Accordingly, the content of V is preferably 0.20% or less. The content of V is preferably 0.15% or less, and more preferably 0.10% or less. On the other hand, to obtain the above-described effect, the content of V is preferably 0.01% or more.

Zr: 0 to 0.030%

Zr (zirconium) forms oxide and the like and produces an effect of improving cleanliness of the weld metal. Accordingly, Zr may be contained as necessary. However, excessively contained Zr causes the excessive formation of oxide and the like and the degradation of producibility instead. Accordingly, the content of Zr is preferably 0.030% or less. The content of Zr is preferably 0.020% or less, and more preferably 0.010% or less. On the other hand, to obtain the above-described effect, the content of Zr is preferably 0.001% or more.

B: 0 to 0.0020%

B (boron) produces an effect of increasing grain boundary strength and increasing high-temperature ductility. Accordingly, B may be contained as necessary. However, excessively contained B not only causes saturation of the above-described effect but also promotes grain boundary precipitation of boron compounds (BN, BC, $Cr_2B$), so that weld cracks will be likely to occur. Accordingly, the content of B is preferably 0.0020% or less. The content of B is preferably 0.0015% or less, more preferably 0.010% or less, and further preferably 0.005% or less. On the other hand, to obtain the above-described effect, the content of B is preferably 0.0002% or more.

Mg: 0 to 0.0010%

Mg (magnesium) is an element that is effective for deoxidation and produces an effect of improving weldability. Accordingly, Mg may be contained as necessary. However, excessively contained Mg causes the excessive formation of oxide and the like and the degradation of producibility. Accordingly, the content of Mg is preferably 0.0010% or less. The content of Mg is preferably 0.0008% or less, and more preferably 0.0005% or less. On the other hand, to obtain the above-described effect, the content of Mg is preferably 0.0001% or more.

Ca: 0 to 0.0020%

Ca (calcium) produces an effect of improving oxidation resistance. Accordingly, Ca may be contained as necessary. However, excessively contained Ca causes the degradation of high-temperature ductility. Accordingly, the content of Ca is preferably 0.0020% or less. The content of Ca is preferably 0.0015% or less, more preferably 0.0010% or less, and further preferably 0.0005% or less. On the other hand, to obtain the above-described effect, the content of Ca is preferably 0.0002% or more.

REM: 0 to 0.010%

REM (rare earth metal) produces an effect of improving high-temperature ductility. Accordingly, REM may be contained as necessary. However, excessively contained REM causes an increase in production costs. Accordingly, the content of REM is preferably 0.010% or less. The content of REM is preferably 0.007% or less, and more preferably 0.005% or less. On the other hand, to obtain the above-described effect, the content of REM is preferably 0.001% or more.
REM refers to a total of 17 elements of Sc, Y, and lanthanoid, and the content of REM refers to a total content of the elements. Industrially, REM is often contained as misch metal.

Ta: 0 to 0.10%

Ta (tantalum) forms carbide so that an effect of improving corrosion resistance will be produced. Accordingly, Ta may be contained as necessary. However, excessively contained Ta causes the degradation of mechanical properties such as toughness. Accordingly, the content of Ta is preferably 0.10% or less. The content of Ta is preferably 0.08% or less, preferably 0.07% or less, more preferably 0.05% or less, and further preferably 0.03% or less. On the other hand, to obtain the above-described effect, the content of Ta is preferably 0.001% or more.

Ti: 0 to 0.35%

Ti (titanium) produces an effect of improving corrosion resistance. Accordingly, Ti may be contained as necessary. However, excessively contained Ti causes the degradation of ductility and toughness. Accordingly, the content of Ti is preferably 0.35% or less. The content of Ti is preferably 0.30% or less, preferably 0.25% or less, more preferably 0.20% or less, more preferably 0.15% or less, and further preferably 0.10% or less. On the other hand, to obtain the above-described effect, the content of Ti is preferably 0.01% or more.

Nb: 0 to 0.30%

Nb (niobium) produces an effect of improving strength at normal and high temperatures. Accordingly, Nb may be contained as necessary. However, excessively contained Nb causes the degradation of weldability. Accordingly, the content of Nb is preferably 0.30% or less. The content of Nb is preferably 0.25% or less, more preferably 0.20% or less, more preferably 0.15% or less, and further preferably 0.10% or less. On the other hand, to obtain the above-described effect, the content of Nb is preferably 0.01% or more.

In the chemical composition of the weld metal of the embodiment, the balance is preferably Fe and impurities. Here, "impurities" refer to components that are introduced due to various factors in raw materials of the base metal, the filler metal, and the like, and production processes when the weld metal is formed and that are acceptable to the extent that they do not adversely affect the embodiment.

4. Back Bead Width

In the weld joint of the embodiment, a back bead width D is preferably 3.0 to 8.0 mm. When the back bead width D is 3.0 mm or more, it is possible to secure a sufficient time needed for the molten metal to solidify. This facilitates gas constituents bubbling up from within the molten pool, resulting in the reduction of blow holes in the weld metal. Accordingly, the back bead width is preferably 3.0 mm or more, preferably 3.1 mm or more, preferably 3.5 mm or more, more preferably 4.0 mm or more, and further preferably 4.5 mm or more. On the other hand, when the back bead width exceeds 8.0 mm, it becomes difficult to stably produce the weld joint. Accordingly, the back bead width is preferably 8.0 mm or less, and more preferably 7.8 mm or less.

Here, the back bead described above refers to a weld bead formed on the back side in one side welding (welded from only one side). In the application, the back bead width is determined by cutting out and metallographically observing a section of the weld zone. The specimens for metallographic observation were collected within a constant region excluding the ranges of 5 cm length from the run-on and run-off ends of welding: one from the longitudinal center of the weld zone and two from positions that were 2 cm away from the center toward the run-on and run-off ends. The average value of the collected three specimens is used as the back bead width. Note that in TIG welding of thin steel sheets and the like, the back bead width is generally controlled to less than 3 mm.

5. Relational Formula between Back Bead Width and Content of Si

In the weld joint of the embodiment, an A-value calculated by the following formula (i) is preferably 0.02 to 0.27:

$$\text{A-value} = -0.051 \times D + 0.0083 \times Si + 0.411 \ ... \ (i)$$

where, Si in the formula represents the content (mass%) of Si contained in the weld metal, and D in the formula represents the back bead width (mm).

The formula (i) is a relational formula between the back bead width D and the content of Si in the weld metal, and when the A-value is 0.02 or more, the prevention of blow holes is facilitated. Accordingly, A-value is preferably 0.02 or more. A-value is more preferably 0.03 or more, further preferably 0.04 or more, and further preferably 0.05 or more.

Similarly, when A-value is 0.27 or less, the prevention of blow holes is facilitated. Accordingly, A-value is preferably 0.27 or less. A-value is more preferably 0.25 or less, more preferably 0.24 or less, and further preferably 0.20 or less.

6. Applications

The weld joint of the embodiment is preferably used in a fuel reformer that carries out hydrogen production in a fuel cell. Note that the type of fuel reformer is not particularly limited and may be SOFC, PEFC, and SOEC. Raw materials used for hydrogen production in the fuel reformer may be, but not particularly limited to, general city gas, hydrocarbons such as methane, alcohols such as methanol and ethanol, and other materials (such as cyclohexane and ammonia). Furthermore, the weld joint of the embodiment may be applicable to methanation, which is a reverse reaction of the hydrogen production.

7. Type of Joint

The weld joint of the embodiment is preferably a butt weld joint. In addition, it is preferably a weld joint with a back bead formed therein, in this case, a weld joint from full penetration welding. Note that the butt welding refers to a method in which base steel materials are welded end-to-end.

8. Production Method

For example, the weld joint of the embodiment can stably be produced by a production method described below.
First, the base steel material serving as a starting material of the weld joint is prepared. As with the chemical composition of the base metal, the base steel material has a chemical composition including preferably, in mass%, C: 0.10% or less, Si: 1.9 to 5.0%, Mn: 4.00% or less, P: 0.040% or less, S: 0.0040% or less, Cr: 15.0 to 26.0%, Ni: 7.0 to 23.0%, N: 0.001 to 0.250%, Al: 0.05% or less, Cu: 0 to 1.00%, Mo: 0 to 1.00%, Sn: 0 to 0.030%, W: 0 to 0.30%, Co: 0 to 1.0%, V: 0 to 0.20%, Zr: 0 to 0.030%, B: 0 to 0.0020%, Mg: 0 to 0.0010%, Ca: 0 to 0.0020%, REM: 0 to 0.010%, Ta: 0 to 0.10%, Ti: 0 to 0.35%, Nb: 0 to 0.30%, and the balance: Fe and impurities, and is preferably an austenitic stainless steel material. Note that the base steel materials may each have a different chemical composition, or may have the same chemical composition. Note that the shape of the austenitic stainless steel material is not particularly limited. It may be a steel sheet, or may be bar steel.
For welding, the base steel material may be machined to form a bevel in the base steel material. The bevel is not particularly limited in its shape and may have a shape such as an I-shape, a Y-shape, a V-shape, an inverted trapezoid, and a U-shape, for example. Any suitable bevel shape may be selected to form a back bead. The thickness of the base steel material is not particularly limited as well, and is preferably 5.0 mm or less, more preferably 3.0 mm or less, and further preferably 1.5 mm or less, in general. Note that the lower limit of the thickness of the base steel material is not particularly limited as well, and generally 0.5 mm or more, and preferably 0.6 mm or more.
A filler metal is used to weld the base steel materials. The steel grade in compliance with YS304, YS308, YS309, YS310, and YS316 defined in JIS standards may be used for the filler metal. For example, YS309 includes such applications as YS309L, YS309LSi, or the like. The welding method is MIG welding of a push-pull system. In addition, welding conditions are not particularly limited, while in the case of the MIG welding, for example, the amount of heat input of the welding conditions is preferably 600 J/cm or more. In the case of the MIG welding of the push-pull system, the amount of heat input is smaller compared to general MIG welding or other welding methods. Note that welding is preferably performed by using shield gas during the welding. Other welding conditions may be according to a usual method.
Hereunder, the weld joint according to the present invention will specifically be described with reference to Examples, while the embodiment is not limited to the Examples.

EXAMPLE

Base steel materials, which were austenitic stainless steel materials, were prepared. The shape of the base steel material was 300 mmL × 300 mmW × 0.8 mmt. With a welding current adjusted to 90 to 120 A, the base steel materials and a filler metal were used to perform butt welding by the MIG welding of the push-pull system to obtain a weld joint. Note that the base steel materials subjected to butt welding have the same composition. Welding was performed in the bead-on-plate method. Table 1 shows the chemical composition of the base metal of the obtained weld joint, and Table 2 shows the chemical composition of the weld metal of the obtained weld joint. Note that the amount of heat input was as shown in Table 3 and YS309 was used for the filler metal.

[Table 1]

Table 1

| Weld joint item | Chemical composition of base metal (mass%, balance: Fe and impurities) | | | | | | | | | |
|---|---|---|---|---|---|---|---|---|---|---|
| | C | Si | Mn | P | S | Cr | Ni | N | Al | Arbitrary additive elements |
| A | 0.06 | 3.2 | 0.75 | 0.026 | 0.0007 | 19.1 | 13.8 | 0.015 | 0.03 | |

(continued)

| Weld joint item | Chemical composition of base metal (mass%, balance: Fe and impurities) | | | | | | | | | |
|---|---|---|---|---|---|---|---|---|---|---|
| | C | Si | Mn | P | S | Cr | Ni | N | Al | Arbitrary additive elements |
| B | 0.002 | 2.1 | 1.01 | 0.025 | 0.0005 | 20.1 | 13.2 | 0.003 | 0.01 | |
| C | 0.09 | 2.2 | 1.12 | 0.025 | 0.0011 | 20.3 | 13.4 | 0.241 | 0.02 | |
| D | 0.05 | 1.9 | 0.08 | 0.012 | 0.0003 | 25.8 | 7.1 | 0.018 | 0.05 | |
| E | 0.07 | 4.9 | 2.10 | 0.023 | 0.0009 | 15.2 | 22.9 | 0.105 | 0.02 | |
| F | 0.05 | 2.0 | 3.93 | 0.039 | 0.0040 | 24.1 | 16.4 | 0.028 | 0.03 | |
| G | 0.05 | 3.1 | 0.82 | 0.024 | 0.0005 | 18.9 | 13.7 | 0.016 | 0.03 | Mo: 0.18, Cu: 0.32 |
| H | 0.05 | 2.1 | 3.04 | 0.017 | 0.0031 | 22.9 | 14.8 | 0.147 | 0.01 | Mo: 0.81, Cu: 0.11, Ti: 0.03, Nb: 0.29 |
| I | 0.03 | 2.5 | 0.53 | 0.019 | 0.0020 | 21.8 | 18.8 | 0.018 | 0.04 | Mo: 0.03, Cu: 0.76, Ti: 0.33, Nb: 0.04 |
| J | 0.03 | 2.1 | 1.35 | 0.016 | 0.0015 | 19.8 | 17.6 | 0.017 | 0.04 | Sn: 0.028. B: 0.0020, Mg: 0.0009, Ca: 0.0019 |
| K | 0.03 | 2.8 | 1.49 | 0.011 | 0.0018 | 20.9 | 20.3 | 0.103 | 0.02 | W: 0.28, Co: 0.9 |
| L | 0.02 | 2.4 | 1.51 | 0.012 | 0.0016 | 20.7 | 15.2 | 0.021 | 0.03 | V: 0.18, Zr: 0.026. REM: 0.009, Ta: 0.08 |
| M | 0.06 | 3.2 | 0.75 | 0.026 | 0.0007 | 19.1 | 13.8 | 0.015 | 0.03 | |
| N | 0.01 | <u>6.1</u> | 0.92 | 0.029 | 0.0030 | <u>26.5</u> | <u>6.9</u> | 0.043 | <u>0.08</u> | |
| O | <u>0.21</u> | 2.1 | <u>4.10</u> | <u>0.042</u> | <u>0.0047</u> | 17.9 | 12.6 | <u>0.273</u> | 0.02 | |
| P | 0.06 | 2.7 | 0.85 | 0.021 | 0.0012 | 18.8 | <u>23.2</u> | 0.024 | 0.04 | |
| Q | 0.06 | 3.1 | 0.65 | 0.015 | 0.0014 | 19.1 | 14,1 | 0.016 | 0.02 | <u>Mo: 1.20. Cu: 1.20. Ti: 0.45. Nb: 0.38</u> |
| R | 0.02 | <u>1.4</u> | 2.14 | 0.018 | 0.0025 | 22.3 | 16.4 | 0.009 | 0.03 | <u>Sn: 0.035. B: 0.0030. Mg: 0.0014. Ca: 0.0026</u> |
| S | 0.03 | 2.7 | 1.51 | 0.013 | 0.0017 | 21.1 | 19.3 | 0.104 | 0.02 | <u>W: 0.38. Co:1.5</u> |
| T | 0.02 | 2.3 | 1.53 | 0.009 | 0.0021 | 19.9 | 15.7 | 0.023 | 0.04 | <u>V: 0.22. Zr: 0.036. REM: 0.015. Ta: 0.11</u> |
| U | 0.02 | <u>1.4</u> | 2.14 | 0.018 | 0.0025 | 22.3 | 16.4 | 0.009 | 0.03 | |
| v | 0.04 | <u>6.5</u> | 1.93 | 0.016 | 0.0024 | 21.4 | 15.8 | 0.007 | 0.05 | |

The underline indicates that the value fell out of the range of the chemical composition of the weld joint of this embodiment.

Table 2

| Weld joint item | Chemical composition of weld metal (mass%, balance: Fe and impurities) | | | | | | | | | |
|---|---|---|---|---|---|---|---|---|---|---|
| | C | Si | Mn | P | S | Cr | Ni | N | Al | Arbitrary additive elements |
| A | 0.04 | 2.3 | 1.06 | 0.024 | 0.0007 | 20.5 | 13.8 | 0.027 | 0.02 | |
| B | 0.01 | 1.6 | 1.23 | 0.024 | 0.0006 | 21.2 | 13.4 | 0.019 | 0.01 | |
| C | 0.07 | 1.7 | 1.30 | 0.024 | 0.0010 | 21.3 | 13.6 | 0.097 | 0.01 | |
| D | 0.04 | 1.5 | 0.63 | 0.015 | 0.0005 | 24.8 | 10.1 | 0.029 | 0.04 | |

(continued)

| Weld joint item | Chemical composition of weld metal (mass%, balance: Fe and impurities) | | | | | | | | | |
|---|---|---|---|---|---|---|---|---|---|---|
| | C | Si | Mn | P | S | Cr | Ni | N | Al | Arbitrary additive elements |
| E | 0.05 | 3.9 | 1.98 | 0.023 | 0.0009 | 17.0 | 22.5 | 0.084 | 0.01 | |
| F | 0.04 | 2.2 | 2.91 | 0.033 | 0.0028 | 23.7 | 15.5 | 0.035 | 0.02 | |
| G | 0.04 | 2.3 | 1.11 | 0.023 | 0.0006 | 20.4 | 13.7 | 0.027 | 0.02 | Mo: 0.12, Cu: 0.14 |
| H | 0.04 | 1.6 | 2.53 | 0.018 | 0.0023 | 23.0 | 14.4 | 0.095 | 0.01 | Mo: 0.51, Cu: 0.07, Ti: 0.018, Nb: 0.18 |
| I | 0.03 | 1.9 | 0.92 | 0.020 | 0.0016 | 22.3 | 17.0 | 0.029 | 0.03 | Mo: 0.018, Cu: 0.45, Ti: 0.21, Nb: 0.024 |
| J | 0.03 | 1.6 | 1.45 | 0.018 | 0.0012 | 21.0 | 16.2 | 0.028 | 0.03 | Sn: 0.016, B: 0.0012, Mg: 0.0006, Ca: 0.0011 |
| K | 0.02 | 2.1 | 1.54 | 0.015 | 0.0014 | 21.7 | 18.0 | 0.083 | 0.01 | W: 0.17, Co: 0.55 |
| L | 0.02 | 3.0 | 1.55 | 0.015 | 0.0013 | 21.6 | 14.7 | 0.031 | 0.02 | V: 0.11, Zr: 0.017, REM: 0.005, Ta: 0.05 |
| M | 0.02 | 2.1 | 1.19 | 0.024 | 0.0008 | 17.1 | 18.5 | 0.020 | 0.04 | |
| N | 0.01 | 4.2 | 1.17 | 0.026 | 0.0022 | 25.3 | 9.4 | 0.045 | 0.09 | |
| O | 0.14 | 1.6 | 3.21 | 0.041 | 0.0042 | 19.8 | 13.0 | 0.192 | 0.01 | |
| P | 0.05 | 2.0 | 1.13 | 0.021 | 0.0011 | 20.4 | 23.1 | 0.032 | 0.03 | |
| Q | 0.04 | 2.3 | 1.00 | 0.017 | 0.0012 | 20.5 | 14.0 | 0.027 | 0.01 | Mo: 1.10, Cu: 1.20, Ti: 0.36, Nb: 0.31 |
| R | 0.02 | 1.2 | 1.95 | 0.019 | 0.0019 | 22.6 | 15.5 | 0.023 | 0.02 | Sn: 0.021, B: 0.0021, Mg: 0.0009, Ca: 0.0012 |
| S | 0.02 | 2.0 | 1.55 | 0.016 | 0.0014 | 21.8 | 17.3 | 0.084 | 0.01 | W: 0.21, Co: 1.1 |
| T | 0.02 | 1.5 | 1.56 | 0.013 | 0.0016 | 21.1 | 15.0 | 0.032 | 0.03 | V:0.13, Zr:0.014, REM:0.011, Ta:0.08 |
| U | 0.02 | 0.9 | 1.72 | 0.020 | 0.0011 | 15.5 | 21.8 | 0.003 | 0.04 | |
| v | 0.02 | 4.4 | 1.82 | 0.018 | 0.0018 | 18.7 | 18.4 | 0.005 | 0.05 | |
| The underline indicates that the value fell out of the range of the chemical composition of the weld joint of this embodiment. | | | | | | | | | | |

On each of the obtained weld joints, the back bead width was examined, and the high-temperature strenght was evaluated according to the procedure below. Metallographic observations were conducted within a constant region excluding the ranges of 5 cm length from the run-on and run-off ends of welding: one of the specimens was collected from the longitudinal center of the weld zone and two from positions that were 2 cm away from the center of the weld zone toward the run-on and run-off ends. The average value of the collected three specimens was used as the back bead width.

The high-temperature strength was evaluated according to the procedure below. High-temperature tensile test specimens were cut out such that the weld zone passed across the center of the parallel portion and a direction perpendicular to the weld axis coincided with the longitudinal direction, and polished such that thickness of the weld zone reached 0.8 mm. Thereafter, high-temperature tensile tests were conducted in compliance with JIS G0567 at 700°C and 800°C to determine the tensile strength (MPa). The results are collectively shown in Table 3 below. When the tensile strength at 700°C was 230 MPa or more and the tensile strength at 800°C was 140 MPa or more, "A" is indicated in the table, meaning that the high-temperature strength was excellent. When the tensile strength at 700°C was 230 MPa or more and the tensile strength at 800°C was 130 MPa or more and less than 140 MPa, "B" is indicated in the table, meaning that the high-temperature strength was good. When the tensile strength at 700°C was less than 230 MPa or the tensile strength at 800°C was less than 130 MPa, "C" is indicated in the table, meaning that the high-temperature strength was poor.

[Table 3]

Table 3

| Weld joint item | Si contained in the weld metal (%) | Production method | | Back bead width | A-value | Hhigh-temperature strength | | Evaluation | Remarks |
|---|---|---|---|---|---|---|---|---|---|
| | | | | | | 700°C | 800°C | | |
| | | Filler metal | Amount of heat input (J/cm) | mm | | MPa | | | |
| A | 2.3 | YS 309LSi | 920 | 6.9 | 0.08 | 262 | 156 | A | Inventive example |
| B | 1.6 | | 920 | 7.1 | 0.06 | 247 | 145 | A | |
| C | 1.7 | | 920 | 6.7 | 0.08 | 275 | 162 | A | |
| D | 1.5 | | 840 | 4.2 | 0.21 | 263 | 157 | A | |
| E | 3.9 | | 920 | 7.9 | 0.04 | 281 | 165 | A | |
| F | 2.2 | | 920 | 7.8 | 0.03 | 253 | 142 | A | |
| G | 2.3 | | 920 | 7.0 | 0.07 | 264 | 158 | A | |
| H | 1.6 | | 920 | 6.8 | 0.08 | 268 | 161 | A | |
| I | 1.9 | | 920 | 7.1 | 0.06 | 281 | 166 | A | |
| J | 1.6 | | 920 | 7.3 | 0.05 | 258 | 162 | A | |
| K | 2.1 | | 880 | 5.5 | 0.15 | 262 | 167 | A | |
| L | 3.0 | | 880 | 5.6 | 0.15 | 274 | 165 | A | |
| M | 2.1 | | 750 | 3.0 | <u>0.28</u> | 232 | 131 | B | |
| <u>N</u> | <u>4.2</u> | | 750 | 3.3 | <u>0.28</u> | <u>204</u> | <u>99</u> | C | Comparative example |
| O | 1.6 | | 920 | 6.5 | 0.09 | <u>219</u> | <u>112</u> | C | |
| P | 2.0 | | 920 | 7.5 | 0.05 | <u>215</u> | <u>103</u> | C | |
| Q | 2.3 | | 920 | 7.0 | 0.07 | <u>227</u> | <u>117</u> | C | |
| R | <u>1.2</u> | | 750 | <u>2.9</u> | 0.27 | 236 | <u>129</u> | C | |
| <u>S</u> | 2.0 | | 920 | <u>2.9</u> | <u>0.28</u> | <u>223</u> | <u>116</u> | C | |
| T | 1.5 | | 1000 | <u>2.9</u> | <u>0.28</u> | 231 | <u>119</u> | C | |
| <u>U</u> | <u>0.9</u> | | 1000 | 4.0 | 0.21 | <u>207</u> | <u>89</u> | C | |
| <u>V</u> | <u>4.4</u> | | 900 | 4.5 | 0.22 | 254 | <u>125</u> | C | |

The underline indicates that the value fell out of the requirements or targeted properties of the weld joint of this embodiment.
The double underline indicates that the value fell out of the preferable range of the weld joint of this embodiment.

Items A to M, wich satisfy the requirements of the embodiment, indicate good high-temperature strenghts. Among Items A to M, Item M did not satisfy the requirement of A-value and indicated a slightly low high-temperature strenght in the Inventive Examples. On the other hand, Items N to V, which did not satisfy the requirements of the embodiment, were poor in high-temperature strenght.

**Claims**

1. A weld joint comprising a base metal consisting of an austenitic stainless steel material, and a weld metal, wherein

   a chemical composition of the base metal comprises, in mass%,
   C: 0.10% or less,
   Si: 1.9 to 5.0%,
   Mn: 4.00% or less,
   P: 0.040% or less,
   S: 0.0040% or less,
   Cr: 15.0 to 26.0%,
   Ni: 7.0 to 23.0%,
   N: 0.001 to 0.250%,
   Al: 0.05% or less,
   Cu: 0 to 1.00%,
   Mo: 0 to 1.00%,
   Sn: 0 to 0.030%,
   W: 0 to 0.30%,
   Co: 0 to 1.0%,
   V: 0 to 0.20%,
   Zr: 0 to 0.030%,
   B: 0 to 0.0020%,
   Mg: 0 to 0.0010%,
   Ca: 0 to 0.0020%,
   REM: 0 to 0.010%,
   Ta: 0 to 0.10%,
   Ti: 0 to 0.35%,
   Nb: 0 to 0.30%, and
   the balance: Fe and impurities, and
   a chemical composition of the weld metal includes, in mass%,
   C: 0.10% or less,
   Si: 1.5 to 4.0%,
   Mn: 3.00% or less,
   P: 0.040% or less,
   S: 0.0040% or less,
   Cr: 17.0 to 25.0%,
   Ni: 10.0 to 23.0%,
   N: 0.100% or less, and
   Al: 0.08% or less.

2. The weld joint according to claim 1, wherein a back bead width D is 3.0 to 8.0 mm.

3. The weld joint according to claim 1, wherein an A-value calculated by a following formula (i) is 0.02 to 0.27:

$$\text{A-value} = -0.051 \times D + 0.0083 \times Si + 0.411 \ ... \ (i)$$

   where, Si in the formula represents a content in mass% of Si contained in the weld metal, and D in the formula represents the back bead width in mm.

4. The weld joint according to claim 2, wherein an A-value calculated by a following formula (i) is 0.02 to 0.27:

$$\text{A-value} = -0.051 \times D + 0.0083 \times Si + 0.411 \ ... \ (i)$$

   where, Si in the formula represents a content in mass% of Si contained in the weld metal, and D in the formula represents the back bead width in mm.

5. The weld joint according to any one of claims 1 to 4, wherein the chemical composition of the base metal includes one or more elements selected from, in mass%,

Cu: 0.01 to 1.00%,
Mo: 0.01 to 1.00%,
Sn: 0.001 to 0.030%,
W: 0.001 to 0.30%,
Co: 0.001 to 1.0%,
V: 0.01 to 0.20%,
Zr: 0.001 to 0.030%,
B: 0.0002 to 0.0020%,
Mg: 0.0001 to 0.0010%,
Ca: 0.0002 to 0.0020%,
REM: 0.001 to 0.010%,
Ta: 0.001 to 0.10%,
Ti: 0.01 to 0.35%, and
Nb: 0.01 to 0.30%.

6. The weld joint according to any one of claims 1 to 4, wherein the weld joint is used in a fuel reformer.

7. The weld joint according to claim 5, wherein the weld joint is used in a fuel reformer.

## INTERNATIONAL SEARCH REPORT

| International application No. |
| --- |
| **PCT/JP2024/003515** |

**A. CLASSIFICATION OF SUBJECT MATTER**

*C22C 38/00*(2006.01)i; *C22C 38/58*(2006.01)i; *H01M 8/0612*(2016.01)i; *H01M 8/10*(2016.01)i; *H01M 8/12*(2016.01)i
FI: C22C38/00 302Z; C22C38/58; H01M8/0612; H01M8/12 101; H01M8/10 101

According to International Patent Classification (IPC) or to both national classification and IPC

**B. FIELDS SEARCHED**

Minimum documentation searched (classification system followed by classification symbols)

C22C38/00; C22C38/58; H01M8/0612; H01M8/10; H01M8/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-178664 A (NISSHIN STEEL CO., LTD.) 08 October 2015 (2015-10-08) paragraphs [0060], [0065], tables 2, 3 | 1-5 |
| Y | paragraphs [0060], [0065], tables 2, 3 | 1–5 |
| A | | 6-7 |
| Y | JP 2007-268577 A (KABUSHIKI KAISHA KOBE SEIKO SHO) 18 October 2007 (2007-10-18) table 2 | 1-5 |
| A | WO 2016/158870 A1 (NIPPON STEEL & SUMIKIN SST) 06 October 2016 (2016-10-06) | 1-7 |
| A | JP 2022-181632 A (NIPPON STEEL STAINLESS STEEL CORP.) 08 December 2022 (2022-12-08) | 1-7 |
| A | JP 2020-164949 A (NIPPON STEEL STAINLESS STEEL CORP.) 08 October 2020 (2020-10-08) | 1-7 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 April 2024** | **07 May 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/003515**

| Patent document cited in search report | | | Publication date (day/month/year) | Patent family member(s) | Publication date (day/month/year) |
|---|---|---|---|---|---|
| JP | 2015-178664 | A | 08 October 2015 | (Family: none) | |
| JP | 2007-268577 | A | 18 October 2007 | (Family: none) | |
| WO | 2016/158870 | A1 | 06 October 2016 | EP 3276036 A1 | |
| JP | 2022-181632 | A | 08 December 2022 | (Family: none) | |
| JP | 2020-164949 | A | 08 October 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017051968 A